(19) Europäisches Patentamt
European Patent Office
Office européen des brevets

(11) Veröffentlichungsnummer: **0 226 155**
**A2**

# (12) EUROPÄISCHE PATENTANMELDUNG

(21) Anmeldenummer: **86117013.2**

(22) Anmeldetag: **08.12.86**

(51) Int. Cl.⁴: **D 06 P 3/36**
C 09 B 67/22, C 09 B 67/38

(30) Priorität: **20.12.85 DE 3545459**

(43) Veröffentlichungstag der Anmeldung:
**24.06.87 Patentblatt 87/26**

(84) Benannte Vertragsstaaten:
**CH DE FR GB LI**

(71) Anmelder: **BAYER AG**
**Konzernverwaltung RP Patentabteilung**
**D-5090 Leverkusen 1 Bayerwerk(DE)**

(72) Erfinder: **Haebler, Wolfgang, Dr.**
**Michaelshöhe 23**
**D-5068 Odenthal(DE)**

(72) Erfinder: **Geiger, Heinz, Dipl.-Ing.**
**In der Taufe 6**
**D-5060 Bergisch Gladbach(DE)**

(72) Erfinder: **Otten, Hans-Günter, Dr.**
**Kurt-Schumacher-Strasse 91a**
**D-5090 Leverkusen 1(DE)**

(72) Erfinder: **Brandt, Horst, Dr.**
**Antoniusstrasse 4**
**D-5068 Odenthal(DE)**

## (54) Verfahren zum Färben und Bedrucken von Polyesterfasermaterialien.

(57) Marineblaue Polyesterfärbungen, die mittels Farbstoffgemischen auf der Basis von Azofarbstoffen aus 2,4-Dinitro-6-cyanoanilin und 3-Acylamino-dialkylaminoanilinen erzeugt werden, zeichnen sich durch eine sehr gute Waschechtheit bei Verwendung von peroxidhaltigen Haushaltswaschmitteln aus. Vorzugsweise enthalten die verwendeten Färbstoffpräparate eineschwach saure Puffereinstellung.

EP 0 226 155 A2

Croydon Printing Company Ltd.

BAYER AKTIENGESELLSCHAFT
Konzernverwaltung RP
Patentabteilung

5090 Leverkusen, Bayerwerk
K/AH

Verfahren zum Färben und Bedrucken von Polyesterfasermaterialien

Gegenstand der Erfindung ist ein Verfahren zur Herstellung von waschechten marineblauen Färbungen auf ganz oder teilweise aus Polyester bestehenden Fasermaterialien nach einer thermischen Beanspruchung.

Es ist allgemein bekannt, daß Färbungen von Polyestertextilmaterialien infolge einer in der Praxis üblichen nachträglichen Wärmebehandlung (z.B. Thermofixieren bei 180°C) schlechte Naßechtheiten, insbesondere eine ungenügende Waschechtheit bei 60°C mit Haushaltswaschmitteln gemäß DIN 54 017, aufweisen.

Diese unerwünschte Erscheinung wird auf die Neigung praktisch aller im Handel befindlichen Dispersionsfarbstoffe zum Thermomigrieren zurückgeführt. Der sich durch die Hitzebehandlung auf der Faseroberfläche angesammelte Farbstoff wird bei der Wäsche abgelöst und färbt die in jenem Standardtest verwendeten Begleitgewebe mehr oder weniger stark an.

Besonders nachteilig macht sich dieser Effekt bei marineblauen Färbungen aus texturiertem Polyester- oder

Polyester/Baumwollmaterialien für beispielsweise Sportbekleidungsartikeln bemerkbar. Diese Artikel sind bekanntlich häufig zur Verzierung mit weißen Gewebeabschnitten aus dem gleichen oder einem anderen (z.B. Polyamid-) Fasermaterial abgesetzt, die dann bei der Wäsche angeschmutzt werden.

Es ist deshalb bereits vorgeschlagen worden, zur Vermeidung von Echtheitsverlusten durch Thermomigration die gefärbte Ware vor dem Thermofixieren mit ausgewählten Hilfsmitteln auf Basis von Polysiloxanen und zinnorganischen Verbindungen (z.B. CYCLANON® 5708 / 5709 der BASF) zu behandeln.

Abgesehen davon, daß dieses Verfahren nicht universell für alle handelsüblichen Farbstoffe sowie für den in der Praxis bedeutenden Polyester/Baumwoll-Artikel anwendbar ist, belastet es durch seine relative aufwendige Applikation (die Behandlungsbäder müssen stets frisch angesetzt werden) und die nicht gerade preiswerten Chemikalien die Färbekosten.

Überraschenderweise wurde nun gefunden, daß man diese Nachteile beseitigen und bei Anwendung peroxidhaltiger Waschmittel zu einwandfreien Waschergebnissen gelangen kann, wenn man die genannten Fasermaterialien mit marineblauen Farbstoffgemischen färbt, die als Blaukomponente mindestens einen Farbstoff der Formel

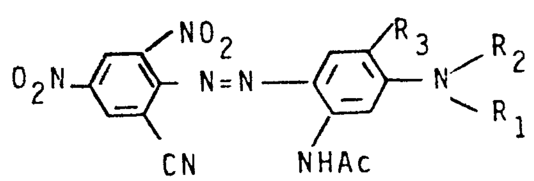

(I)

enthalten, worin

Ac einen Acylrest,
$R_1$ einen Alkyl- oder Alkoxyalkylrest,
$R_2$ $R_1$ oder einen Aralkylrest und
$R_3$ $R_1$, Wasserstoff, einen Alkoxyrest oder - gemeinsam mit $R_2$ - eine Alkylengruppe bedeuten.

Geeignete Acylreste sind solche der Formel -COR, worin R Wasserstoff, $C_1$-$C_5$-Alkyl, gegebenenfalls durch $C_1$-$C_4$-Alkyl, $C_1$-$C_4$-Alkoxy oder Cl substituiertes Phenyl oder Thienyl bedeutet.

Geeignete Alkyl- und Alkoxyreste sind solche mit 1 - 4 C-Atomen. Geeignete Aralkylreste sind $C_1$-$C_4$-Alkylphenylreste, die im Phenylkern wie oben angegeben substituiert sein können.

Geeignete Alkylenreste, die $R_2$ und $R_3$ gemeinsam unter Ringschluß bilden können, sind solche mit 2 oder 3 Kettengliedern. Bevorzugt ist der Rest

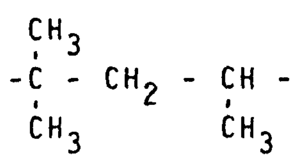

Bevorzugte Farbstoffe sind solche der Formel I, worin
Ac für Acetyl, Propionyl, n/i-Butyryl oder Benzoyl,
$R_1$ für Ethyl, n-Propyl, n-Butyl oder Methoxy(Ethoxy)-ethyl,
$R_2$ für $R_1$, Benzyl oder Phenylethyl und
$R_3$ für H oder Methoxy stehen.

Die erfindungsgemäß in den Marineblaumischungen zu verwendenden Farbstoffe liefern auf Polyesterfasermaterialien nach einer thermischen Behandlung (z.B. 30 sec. 180°C) Waschechtheiten von mindestens 4 gemäß DIN 54 017.

Dieser Effekt war in keiner Weise vorhersehbar, da strukturell sehr ähnliche, handelsübliche Farbstoffe wie z.B. Farbstoffe der Formel I, worin die 2-Nitrogruppe in der Diazokomponente durch eine CN-Gruppe ersetzt ist, oder die hier ebenfalls nicht beanspruchten Farbstoffe der Formel I, worin $R_1$ für Wasserstoff steht, deutlich schlechtere Waschechtheiten unter den oben erwähnten Bedingungen ergeben.

Die erfindungsgemäß zu verwendenden Blaufarbstoffe sind an sich bekannt und beispielsweise in folgender Patentliteratur beschrieben: DE-A 19 23 592, DE-A 20 15 351, DE-A 16 44 141.
Die Herstellung der Marineblaumischung erfolgt in ebenfalls bekannter Weise durch "Abtrüben" dieser Blaufarbstoffe mit entsprechenden roten Dispersionsfarbstoffen.

Geeignete Rotkomponenten sind vor allem Azofarbstoffe der Formel

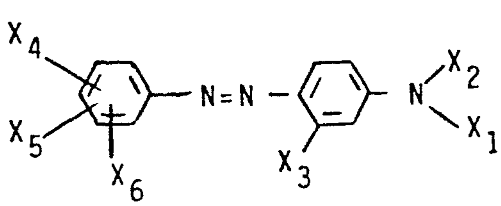

(II)

worin

$X_1$ für einen Rest der Formel $CH_2CH_2COOZ$ oder $CH_2CH_2O\overset{O}{\overset{\|}{C}}Z$,

$X_2$ für $X_1$, Alkyl oder $CH_2CH_2CN$,

$X_3$ für H oder Alkyl, vorzugsweise $CH_3$,

$X_4$ für $NO_2$ oder COOZ,

$X_5$ für H, Cl oder Br und

$X_6$ für $X_5$ stehen,

wobei

Z Aryl, Aralkyl, Cycloalkyl und insbesondere Alkyl bedeutet,

wobei die genannten Kohlenwasserstoffreste die oben bezeichneten bevorzugten Bedeutungen haben.

Besonders bevorzugte Farbstoffe sind gelbstichige Rots der Formel II, worin $X_1$ für $CH_2CH_2COOZ$, $X_6$ für H, $X_4$ für $NO_2$ und Z für Alkyl stehen.

Vorzugsweise werden zur Herstellung der Marineblaumischungen die Blaufarbstoffe der Formel I in Form solcher Präparationen eingesetzt, die ein nichtreduzierendes und nichtoxidierendes Puffersystem (z.B. Phosphatpuffer) enthalten, welches beim Einbringen der Präparation ins Färbebad einen schwach sauren pH-Bereich (z.B. pH 4,5 - 6,0) einstellt.

Als zu färbende Fasermaterialien kommen Polyester im weitesten Sinne des Wortes in Betracht, also auch z.B. Celluloseester. Bevorzugt sind aromatische Polyester vom Typ Polyethylenterephthalat und deren Mischungen mit Baumwolle.

In den nachfolgenden Beispielen bedeuten "Teile" Gewichtsteile.

Beispiele:

Beispiel 1

100 Teile Strickware aus texturiertem Polyester werden in einer Jet-Färbemaschine mit einer Färbeflotte behandelt, die aus

2.97 Teilen des Blaufarbstoffs A in formierter Form
0,35 Teilen des Rotfarbstoffs A in formierter Form
1 Teil Dispergiermittel
2 Teilen Essigsäure und
993 Teilen Wasser besteht.

Die Flotte wird schnell auf 80°C und von 80°C auf 130°C innerhalb 30 min. aufgeheizt. Bei 130°C wird 20 min. verweilt. Nach Abkühlen wie üblich gespült und alkalisch reduktiv bei 70°C 20 min. nachgereinigt.

Man erhielt eine egale tiefe Marineblaufärbung. Diese Färbung zeigt ausgezeichnete Reib- und Naßechtheiten, auch wenn die Färbung einer nachträglichen Thermofixierung bei 180°C 30 sec. unterworfen wird.
Die Thermomigrierechtheit wird an der nachthermofixierten Färbung durch eine Wäsche 60°C gegen Multifibre nach DIN 54017 geprüft.

Als Bewertungskriterium gilt das Anbluten von Polyamid nach Grauskala 1 - 5. Nach dieser Prüfmethode wird die obige Färbung mit 4 - 5 bewertet.

Beispiel 2
Ähnliche Ergebnisse werden erzielt, wenn man anstelle des Farbstoffs A den Farbstoff B verwendet.

Beispiel 3
Ähnliche Ergebnisse wie in Beispiel 1 werden erhalten, wenn man anstelle des Farbstoffs A den Farbstoff C verwendet.

Die in den vorangegangenen Beispielen genannten Farbstoffe besitzen folgende Formeln:

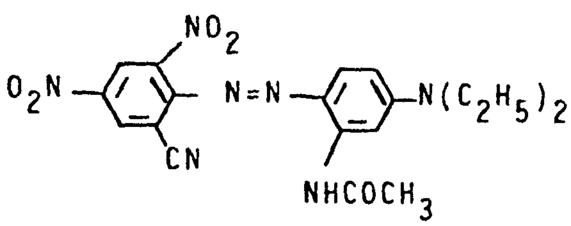
(A)

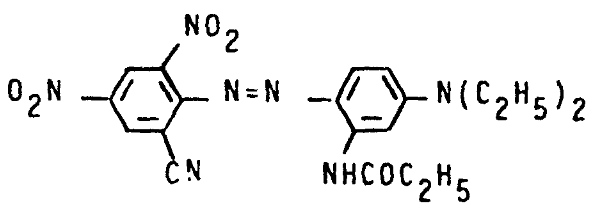
(B)

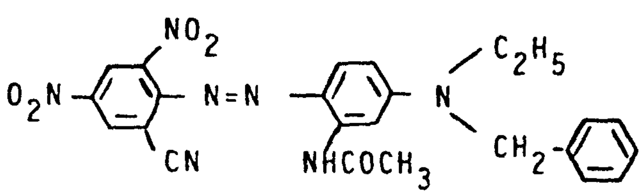
(C)

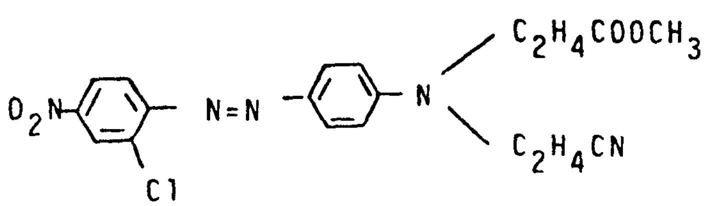
(D)

Beispiel 4

Eine handelsfähige Farbstoffpräparation wurde wie folgt hergestellt:

Eine Mischung aus
16 Teilen Farbstoff A ("Rohfarbe")
40.8 Teilen Dispergiermittel (Kondensationsprodukt von Naphthalinsulfonsäuren + Formaldehyd)
31.4 Teilen Dispergiermittel (Kondensationsprodukt Ditolyläther + Formaldehyd)
6.2 Teilen $NaH_2PO_4$
0.1 % Netz- und Entschäumungsmittel
0.5 % Entstaubungsmittel
5 Teile Wasser

wird in der Perlmühle gemahlen und anschließend sprühgetrocknet.

Patentansprüche:

1.) Verfahren zur Herstellung von waschechten marineblauen Färbungen auf ganz oder teilweise aus Polyester bestehenden Fasermaterialien nach einer thermischen Beanspruchung, dadurch gekennzeichnet, daß man Farbstoffgemische verwendet, die als Blaukomponente mindestens einen Farbstoff der Formel

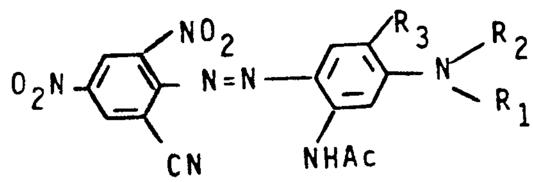

enthalten, worin

| | |
|---|---|
| Ac | einen Acylrest, |
| $R_1$ | einen Alkyl- oder Alkoxyalkylrest, |
| $R_2$ | $R_1$ oder einen Aralkylrest und |
| $R_3$ | $R_1$, Wasserstoff, einen Alkoxyrest oder - gemeinsam mit $R_2$ - eine Alkylengruppe bedeuten. |

2.) Verfahren nach Anspruch 1, dadurch gekennzeichnet, daß man als Blaukomponente einen Farbstoff der angegebenen Formel verwendet, worin

| | |
|---|---|
| Ac | für Acetyl, Propionyl, n/i-Butyryl oder Benzoyl, |
| $R_1$ | für Ethyl, n-Propyl, n-Butyl oder Methoxy(Ethoxy)-ethyl, |
| $R_2$ | für $R_1$, Benzyl oder Phenylethyl und |
| $R_3$ | für H oder Methoxy stehen. |

3.) Verfahren nach Anspruch 1, dadurch gekennzeichnet, daß man als Blaukomponente einen Farbstoff der Formel

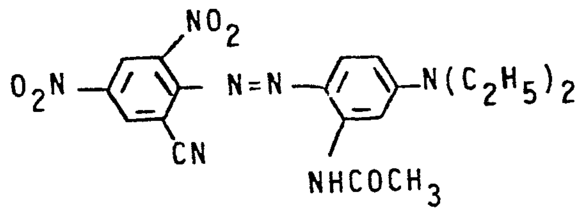

verwendet.

4.) Verfahren nach Ansprüchen 1 - 3, dadurch gekennzeichnet, daß man neben dem Blaufarbstoff den roten Farbstoff der Formel

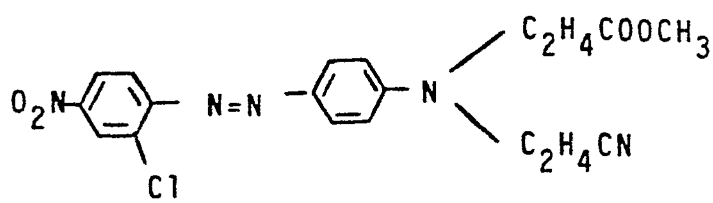

verwendet.

5.) Verfahren nach Ansprüchen 1 - 4, dadurch gekennzeichnet, daß die Farbstoffe in Form solcher Präparationen eingesetzt werden, die ein nichtreduzierendes bzw. nichtoxidierendes Puffersystem zur Erzeugung eines schwach sauren pH-Bereichs enthalten.